# EUROPÄISCHE PATENTANMELDUNG

(11) **EP 2 243 975 A2**
(43) Veröffentlichungstag der Anmeldung: **27.10.2010**
(21) Anmeldenummer: 10155185.1
(22) Anmeldetag: 02.03.2010
(51) Int. Cl.: F16F 1/22, F16F 3/02

(54) **Vorrichtung zur Veränderung einer Blattfedercharakteristik**

(30) Priorität: 24.04.2009 DE 102009002635; 11.05.2009 DE 102009003008
(71) Anmelder: Müller, Andreas, 12621 Berlin (DE); Schana, Harold, Johannesburg 2001 (ZA)
(72) Erfinder: Müller, Andreas, 12621 Berlin (DE); Schana, Harold, Johannesburg 2001 (ZA)
(74) Vertreter: Gulde Hengelhaupt Ziebig & Schneider

(57) **Zusammenfassung**

Die Erfindung betrifft eine Vorrichtung zur Veränderung einer Blattfedercharakteristik, welche wenigstens eine Zug- und/oder Druckfeder zur Veränderung der Federrate einer Blattfeder, an der die Vorrichtung anbringbar ist, umfasst, wobei an ein erstes Ende der Zug- und/oder Druckfeder eine Befestigungseinrichtung zur Befestigung der Zug- und/oder Druckfeder an der Blattfeder angeschlossen ist.

Es ist vorgesehen, dass die Vorrichtung (3) außerdem wenigstens eine Biegefeder (200) zur zusätzlichen Beeinflussung der Blattfederrate und eine Anschlusseinrichtung (220) zum mechanischen Verbinden der Biegefeder (200) mit der Blattfeder (10) und variierbaren Einstellung des Abstandes (212) zwischen zumindest einem Biegefederabschnitt (214) und der Blattfeder (10) umfasst.

Die Erfindung betrifft ferner eine Federeinheit, umfassend wenigstens eine Blattfeder (10) und eine daran befestigte erfindungsgemäße Vorrichtung (3) zur Veränderung einer Blattfedercharakteristik, sowie ein Kraftfahrzeug, insbesondere einen Transporter oder Bus, umfassend wenigstens eine erfindungsgemäße Federeinheit.

## Beschreibung

Die vorliegende Erfindung betrifft eine Vorrichtung zur Veränderung einer Blattfedercharakteristik einer Blattfeder, die insbesondere bei Kraftfahrzeugen, wie Transportern oder Bussen, zur Anwendung kommen. Außerdem betrifft die vorliegende Erfindung eine Federeinheit, die die erfindungsgemäße Vorrichtung zur Veränderung einer Blattfedercharakteristik sowie eine Blattfeder umfasst. Daneben ist die vorliegende Erfindung außerdem auf ein Kraftfahrzeug gerichtet, welches das erfindungsgemäße Federsystem umfasst.

Der Einsatz so genannter Blattfederfahrwerke bei Kraftfahrzeugen ist bekannt. Diese Blattfederfahrwerke sind günstig, anspruchslos und nahezu wartungsfrei. Einsatzgebiete sind beispielsweise bei Transportern, insbesondere Reisemobilen oder dergleichen, zu finden. Hier halten die Blattfederfahrwerke die Reifen der Hinterachse verlässlich in der Spur und tragen das Gewicht des Fahrzeugaufbaus.

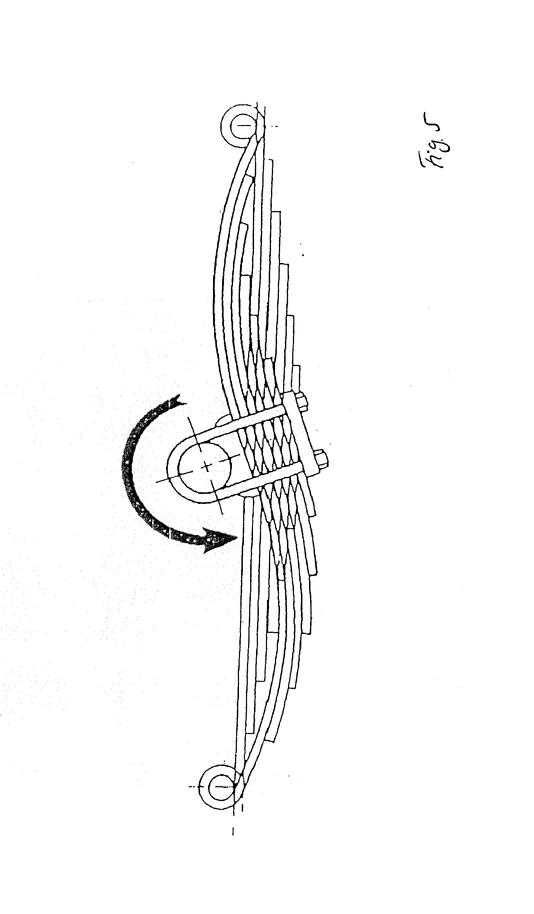

Beim Einsatz von Blattfedern ist deren Federcharakteristik auf eine maximale Nutzlast des Fahrzeuges ausgelegt. Hiermit einhergehend sind oftmals Komforteinbußen verbunden. Fährt das Fahrzeug mit einer Last weit unterhalb der maximalen Nutzlast, sprechen die Blattfederfahrwerke nur hölzern an und federn recht hart. Zudem neigen Fahrzeuge mit Blattfederfahrwerken bei Kurvenfahrt gern oft zur Seite und wanken beim Gegenlenken überdeutlich zurück. Auch in Extremsituationen, beispielsweise bei einer Vollbremsung, neigen mit Blattfederfahrwerken versehene Fahrzeuge zu einer so genannten Achsverdrehung, das heißt, es erfolgt eine Torsion der Achse beziehungsweise des Fahrwerkes um eine quer zur Fahrtrichtung liegende Achse, im Normalfall die Fahrzeugachse. Dies erzeugt eine ungleichmäßige Biegebelastung des Blattfederpaketes. Damit verbunden ist die Einbringung von Schwingungen in das Fahrzeug, was die Beherrschbarkeit beeinträchtigt. Die damit einhergehende unerwünschte Verformung der Blattfeder ist in Figur 5 gezeigt. Mit dem Pfeil ist dabei die Richtung des auf die Achse wirkenden Torsionsmomentes angezeigt, welches von den Klemmbügeln und dem Lagerbock auf die Blattfeder übertragen wird. Es kommt auf der rechten Seite zu einer unerwünscht tiefen Einfederung und auf der linken Seite zu einer Biegebelastung, für die die Feder nicht konzipiert ist.

Zum Zweck der Einstellung einer Blattfedercharakteristik ist zum Beispiel eine einstellbare Spiralfederanordnung aus der EP 0 633 307 A1 bekannt, bei der an der einen Seite einer Blattfeder eine zusätzliche Spiralfeder als Zugfeder angeordnet ist. Nachteilig an dieser Ausführungsform ist der relativ starke Verschleiß an der Stelle der Befestigung der Spiralfeder an der Blattfeder sowie ein Mangel an direkter Beeinflussung der Biegelinie der Blattfeder.

Der Erfindung liegt die Aufgabe zugrunde, eine Vorrichtung und eine Federeinheit der gattungsgemäßen Art anzugeben, mittels derer das Federungsverhalten von Blattfederfahrwerken, insbesondere bei extremen Fahrsituationen, deutlich verbessert ist.

Zur Lösung der angegebenen Aufgabe wird eine Vorrichtung zur Veränderung einer Blattfedercharakteristik zur Verfügung gestellt, welche wenigstens eine Zug- und/oder Druckfeder zur Veränderung der Federrate einer Blattfeder, an der die Vorrichtung anbringbar ist, umfasst, wobei an ein erstes Ende der Zug- und/oder Druckfeder eine Befestigungseinrichtung zur Befestigung der Zug- und/oder Druckfeder an der Blattfeder angeschlossen ist. Erfindungsgemäß weist die Vorrichtung außerdem wenigstens eine Biegefeder zur zusätzlichen Beeinflussung der Blattfederrate und eine Anschlusseinrichtung zum mechanischen Verbinden der Biegefeder mit der Blattfeder und variierbaren Einstellung des Abstandes zwischen zumindest einem Biegefederabschnitt und der Blattfeder auf. Die Biegefeder ist somit eine extra oder zusätzlich angeordnete Feder, die nicht Teil des ursprünglichen Blattfederpaketes ist. Gegebenenfalls können statt einer zusätzlichen Biegefeder auch mehrere übereinander angeordnete Federlagen verwendet werden, die zusammen ein Paket, ähnlich wie das Blattfederpaket, bilden. Die Biegefeder sollte in einem ihrer Endbereiche mittels der Anschlusseinrichtung beabstandet zur Blattfeder mechanisch an diese anschließbar sein. Die Anschlusseinrichtung sowie die Biegefeder sollten derart ausgestaltet sein, dass der Abstand zwischen der Biegefeder und der Blattfeder mittels der Anschlusseinrichtung verstellbar ist. Somit ist bei Verstellung des Abstandes zwischen der Blattfeder und dem Biegefederendbereich die Vorspannung in der Biegefeder und damit in der mit der Biegefeder verbundenen Blattfeder die Federrate veränderbar. Vorteilhafterweise hat zu diesem Zweck die Biegefeder eine Krümmung, die in Bezug zur Oberflächenkrümmung der obersten Lage beziehungsweise des Hauptblattes der Blattfeder unterschiedlich ist. Somit ist der durch die Krümmung hervorgerufene Abstand mittels der Anschlusseinrichtung variierbar. Zur Beeinflussung einer jeden Seite einer im Wesentlichen symmetrisch angeordneten Blattfeder auf einem Lagerbock, wirkt die Zug- und/oder Druckfeder auf eine erste Blattfederseite und die Biegefeder auf die zweite Blattfederseite.

Es sind somit durch die erfindungsgemäße Vorrichtung je Blattfeder zwei Verstellungen der Blattfedercharakteristik möglich, nämlich erstens durch die Einstellung der Zug- und/oder Druckfeder und zweitens durch die Einstellung der Biegefeder. Somit sind an jeder Achse, die mit zwei Blattfederpaketen ausgerüstet ist, insgesamt vier Verstellmöglichkeiten gegeben. Durch die zweifache Beeinflussung der Federrate einer Blattfeder kann das Fahrverhalten eines damit ausgerüsteten Fahrzeuges wesentlich differenzierter eingestellt werden, insbesondere bezüglich Brems- oder Beschleunigungsvorgängen oder ungleichmäßiger Kraftfahrzeugbeladung. Das heißt, dass die Kombination der beiden in ihren Federkräften variierbaren Federelemente der erfindungsgemäßen Vorrichtung Verstellmöglichkeiten bewirkt, die mit nur einer Feder nicht realisierbar sind.

Zur Herstellung einer Einheit von Zug- und/oder Druckfeder und Biegefeder ist vorteilhafterweise vorgesehen, dass die Biegefeder mit der Zug- und/oder Druckfeder mit deren zweitem Ende mechanisch verbunden ist. Diesbezüglich ist vorteilhafterweise vorgesehen, dass die Zug- und/oder Druckfeder direkt an die Biegefeder mechanisch angeschlossen ist. Diese direkte Anbindung kann mittels einer Schraubverbindung realisiert sein. Bei dieser bevorzugten Alternative sollte dabei die Verbindung der Biegefeder mit der Zug- und/oder Druckfeder auf der der Befestigungseinrichtung gegenüber liegenden Seite der Zug- und/oder Druckfeder erfolgen. Diese als bevorzugt angegebene Ausführungsform bildet somit eine Alternative aus zu einer Ausgestaltung, bei der die Zug- und/oder Druckfeder mit einer Blattfeder auf einer Blattfederseite verspannt ist und auf der anderen Blattfederseite eine Biegefeder mit der Blattfeder verspannt ist und die Zug- und/oder Druckfeder und die Biegefeder lediglich indirekt über die Blattfeder miteinander verbunden sind.

Zur Fixierung der Biegefeder auf der Blattfeder ist vorgesehen, dass die Biegefeder wenigstens eine im Wesentlichen senkrecht zur Biegeebene verlaufende Fläche aufweist, welche flächig an einen Teilbereich einer oberen Lage der zu beeinflussenden Blattfeder anlegbar und dort fixierbar ist. Die herzustellende Fixierung kann dabei eine herkömmliche Klemmung, wie sie zum Beispiel bereits zur Herstellung des Blattfederpaketes eingesetzt wird, sein. Mit der Biegeebene ist dabei die Ebene gemeint, in der die Durchbiegung zu verzeichnen ist. Dies ist im Wesentlichen die Ebene der wirkenden Kräfte. Mit dem Begriff der oberen Lage der Blattfeder ist das Hauptblatt der Blattfeder gemeint.

Es ist vorteilhafterweise vorgesehen, dass die Biegefeder einen Krümmungsradius aufweist, der unterschiedlich zum Krümmungsradius einer obersten Lage einer Blattfeder ist, auf der die Biegefederlage zu befestigen ist. Die Krümmung der Biegefeder verläuft somit ebenfalls in der Biegeebene und bewirkt eine Erhöhung des Flächenträgheitsmomentes des Verbundes von Blattfeder und Biegefeder. Dadurch wird ebenfalls eine Vergrößerung der Biegesteifigkeit erzeugt. Je weiter die Biegefeder von der Blattfeder absteht, um so höher ist die Biegesteifigkeit und damit die Federrate. Aber nicht nur dadurch wird die Federrate der Blattfeder beeinflusst, sondern auch durch die Vorspannung der mit der Blattfeder zu verbindenden Biegefeder, wobei die Biegefeder zusammen mit den einzelnen Lagen der Blattfeder wie ein Federpaket wirkt. Der Abstand des Biegefederendbereiches wird somit hauptsächlich durch die Krümmung der Biegefeder realisiert. Wie bereits erwähnt, lässt sich mittels der Anschlusseinrichtung dieser Abstand des Biegefederendes zur Blattfedereinstellung und somit die Vorspannung der Biegefeder einstellen.

Zur Variation der von der Zug- und/oder Druckfeder ausgeübten Federkraft ist vorgesehen, dass die Befestigungseinrichtung eine erste Verstelleinrichtung umfasst, mittels derer die Vorspannung der Zug- und/oder Druckfeder variierbar ist.

Insbesondere kann dabei vorgesehen sein, dass die Befestigungseinrichtung eine Klemmeinheit mit wenigstens einem Aufnahmeformelement zur Aufnahme einer an der Zug- und/oder Druckfeder angeordneten ersten Gewindestange aufweist. Die Klemmeinheit ermöglicht dabei eine Klemmung der Befestigungseinrichtung an einer im Wesentlichen beliebigen Stelle auf einer oberen Lage beziehungsweise auf dem Hauptblatt der Blattfeder. Die Klemmeinheit umfasst vorteilhafterweise zwei Spannplatten, die mit Gewindebolzen und Muttern miteinander verbindbar sind, so dass beim Anziehen der Muttern der Abstand zwischen den Spannplatten verringert wird und ein Kraftschluss zwischen der oberen Lage der Blattfeder und den Spannplatten zur Fixierung der Befestigungseinrichtung hergestellt wird. Die Länge der Gewindebolzen der Klemmeinheit kann gegebenenfalls derart ausgeführt sein, dass auch mehrere Lagen der Blattfeder umfasst werden. Das Aufnahmeformelement ist bevorzugt an einem Winkel, dessen einer Schenkel als Spannplatte zur Realisierung der Klemmwirkung dient, angeordnet, wobei das Aufnahmeformelement insbesondere ein Durchgangsloch sein kann, durch welches eine von der Zug- und/oder Druckfeder kommende Gewindestange führbar ist und hinter dem Winkelschenkel mit einer oder mehreren Muttern verschraubt ist. Durch Drehung der Mutter lässt sich eine Zugspannung in die Gewindestange einbringen und somit die Vorspannung in der an der Gewindestange angeschlossenen Zug- und/oder Druckfeder variieren und somit Einfluss nehmen auf die Federrate der mit der Zug- und/oder Druckfeder verbundenen Blattfeder.

In einer besonderen Ausgestaltung können die Muttern auch auf eine Kugel-Kugelpfanne-Einheit wirken, die sich an einem Winkelschenkel abstützt und somit die Einstellung unterschiedlicher Wirkwinkel der Kraft der Zug- und/oder Druckfeder auf den Winkelschenkel erleichtert.

Vorteilhafterweise hat die Zug- und/oder Druckfeder eine Federrate von 30 bis 80 N/mm. Zur Anwendung bei den meisten Kleintransportern haben sich Federn mit einer Federrate von 40 bis 55 N/mm, insbesondere 45 N/mm, bewährt. Dabei ist die vorliegende Erfindung selbstverständlich nicht auf die angegebenen Federraten eingeschränkt, sondern sie ist mit Zug- und/oder Druckfedern ausführbar, die auch wesentliche Abweichungen hinsichtlich der Federrate zu den angegebenen Werten aufweisen.

Zur Realisierung einer ausreichenden Vorspannung ist vorgesehen, dass die Biegefeder aus einem typischen Blattfedermaterial besteht.

Wie bereits beschrieben, ist die Biegefeder einer Blattfeder mittels einer Anschlusseinrichtung mechanisch befestigt. Die Anschlusseinrichtung umfasst dabei vorteilhafterweise einen Bügel zum Umgreifen wenigstens einer Lage der Blattfeder. Die Schenkel des Bügels weisen vorteilhafterweise jeweils ein Außengewinde auf, welche in Zusammenwirkung mit Durchgangslöchern an einer weiteren Spannplatte an der Anschlusseinrichtung und Muttern einen mechanischen Anschluss realisieren, der an der Blattfeder verschiebbar ist und die Einstellung des Abstandes zwischen Blattfeder und Biegefeder beziehungsweise Biegefederendbereich ermöglicht. Die Verschiebbarkeit der Anschlusseinrichtung an der Blattfeder wirkt sich dabei insbesondere erleichternd auf die Montage der erfindungsgemäßen Vorrichtung aus. Das heißt, dass die Position des Bügels der Anschlusseinrichtung nicht durch ein besonderes Formelement festgelegt ist, sondern sich in einem Bereich unabhängig von der Position der Befestigung der Zug- und/oder Druckfeder variabel einstellen lässt. Durch die Drehung der Muttern, die auf den Außengewinden der Bügelschenkel angeordnet sind, lässt sich der Abstand zwischen der Blattfeder und dem Biegefederendbereich variabel und stufenlos einstellen.

Erfindungsgemäß wird außerdem eine Federeinheit zur Verfügung gestellt, welche wenigstens eine Blattfeder, gegebenenfalls ein Blattfederpaket, und eine daran befestigte erfindungsgemäße Vorrichtung umfasst, wobei die Biegefeder der Vorrichtung neben der Befestigung mittels der Zug- und/oder Druckfeder zugeordneten Befestigungseinrichtung und der der Biegefeder zugeordneten Anschlusseinrichtung mit wenigstens einer im Wesentlichen senkrecht zur Biegeebene verlaufenden Fläche flächig an einen Teilbereich des Hauptblattes der Blattfeder angelegt und dort befestigt ist.

Vorteilhafterweise ist die Befestigung der Biegefeder im Anlagebereich mittels einer Klemmeinrichtung zur kraftschlüssigen Verbindung der einzelnen Lagen der Blattfeder realisiert. Die Klemmeinrichtung zur Herstellung des ursprünglichen Blattfederpaketes wird auch als Lagerbock bezeichnet. Das heißt, dass eine herkömmliche Klemmeinrichtung in Form eines oder mehrerer u-förmiger Bügel zur Herstellung eines Blattfederpaketes ebenfalls zur Klemmung der extra vorgesehenen Biegefeder dient, die dann als zusätzliche Blattfederlage an den Lagen der ursprünglich vorgesehenen Blattfeder angeordnet ist. Gegebenenfalls sind dazu die ursprünglich angeordneten Bügel durch etwas längere Bügel auszutauschen.

Es ist dabei vorteilhafterweise vorgesehen, dass sich der Anlagebereich der Biegefeder an die Blattfeder im Wesentlichen in der Mitte der Blattfeder befindet und die Verbindung zwischen der Blattfeder und der Biegefeder durch die Anschlusseinrichtung und die Verbindung zwischen der Blattfeder und der Zug- und/oder Druckfeder durch die Befestigungseinrichtung an den jeweiligen Endbereichen der Blattfeder realisiert ist. Das heißt, dass die Verbindung der Biegefeder mit der Blattfeder in dem Blattfederbereich vorgesehen ist, der der Befestigungseinrichtung gegenüber liegt. Die Befestigungseinrichtung und die Anschlusseinrichtung sind somit in der Nähe der Augen der Blattfeder, insofern diese mit Augen ausgestattet ist, angeordnet.

Zur Erzielung optimaler Verstärkungs- beziehungsweise Verstellungseffekte mittels der erfindungsgemäßen Vorrichtung ist vorgesehen, dass der Abstand zwischen der Anschlusseinrichtung einer Biegefeder und der Befestigungseinrichtung an der Zug- und/oder Druckfeder wenigstens fünf Sechstel der Länge der Blattfeder beträgt. Dabei ist die Erfindung nicht auf dieses angegebene Längenverhältnis eingeschränkt, sondern es kann vorgesehen sein, dass auch kürzere Vorrichtungen an längeren Blattfedern angeordnet sind. Zur Erzielung ausreichender Veränderungen der Blattfedercharakteristik sollten dann gegebenenfalls Federelemente mit anderen Federraten und/oder längere Verstellwege realisiert werden.

Vorteilhafterweise ist die Befestigungseinrichtung mittels der Klemmeinheit und die Anschlusseinrichtung mittels des Bügels mit der Blattfeder mechanisch verbunden. Zur Verbindung der Biegefeder mit der Zug- und/oder Druckfeder ist vorgesehen, dass die Biegefeder auf der der Anschlusseinrichtung gegenüber liegenden Seite einen abgewinkelten Bereich umfasst, in welchem ein zweites Durchgangsloch angeordnet ist, durch welches eine zweite, von der Zug- und/oder Druckfeder kommende Gewindestange hindurch geführt ist und mit einer oder mehreren Muttern dort arretiert ist. Auch hier kann, wie bereits zur ersten Gewindestange beschrieben, die Verschraubung auf eine Kugel-Kugelpfanne-Einheit zum Ausgleich unterschiedlicher Winkel wirken. Die mechanische Verbindung zwischen der Zug- und/oder Druckfeder mit der ersten und/oder zweiten Gewindestange kann, wie in der EP 0 663 307 A1 beschrieben, erfolgen.

Die vorliegende Erfindung ergänzend wird außerdem ein Kraftfahrzeug, insbesondere ein Transporter oder Bus, zur Verfügung gestellt, welches wenigstens eine erfindungsgemäße Federeinheit umfasst. Vorteilhafterweise sind an einem solchen Kraftfahrzeug an jeder Achse zwei Federeinheiten anzuordnen beziehungsweise zu jedem Rad eine Federeinheit zuzuordnen.

Mit der vorliegenden Erfindung ist somit bei einem Fahrzeug mit einer rechten Blattfeder und einer linken Blattfeder je Fahrzeugachse eine vierfache variable Einstellung möglich. Es lässt sich somit eine Fahrwerksoptimierung für blattgefederte Kraftfahrzeuge mit einer Straffung der Federkennlinie bei entsprechender Belastung herbeiführen. In Verbindung mit der Funktion der Originalblattfeder des Kraftfahrzeuges, die erhalten bleibt, tritt keine Beeinträchtigung des normalen Fahrverhaltens, sondern lediglich eine Verbesserung ein. Das Fahrwerk selbst bleibt im Originalzustand erhalten. Veränderungen an einzelnen Originalteilen sind bis auf gegebenenfalls vorzunehmende Verlängerungen der Klemmbügel zur Herstellung des Blattfederpaketes nicht erforderlich. Der Vorteil der erfindungsgemäßen Vorrichtung sowie der dadurch hergestellten Federeinheit ist eine variabel einstellbare Blattfederverstärkung beziehungsweise -einstellung derart, dass je nach Fahrzeug, Achs- und Blattfedertyp und Blattfederstärke sowohl die Federrate auf der linken Fahrzeugseite, auf der rechten Fahrzeugseite als auch in Fahrtrichtung vor der Fahrzeugachse und hinter der Fahrzeugachse unabhängig voneinander eingestellt werden kann.

Hierdurch wird erreicht, dass insbesondere in Extremsituationen mittels der erfindungsgemäßen Vorrichtung in Zusammenarbeit mit der eingebauten Serienblattfeder in das Schwingungsverhalten und Federungsverhalten des Fahraufbaus eingegriffen werden kann und das Fahrzeug entweder wieder in eine stabile Straßenlage gebracht beziehungsweise in der stabilen Straßenlage gehalten wird. Gleichzeitig wird, auch unabhängig von Extremsituationen, eine Optimierung der Fahrdynamik erreicht, wobei sich aufgrund des Einsatzes der erfindungsgemäßen Vorrichtung das dynamische Verhalten des Fahrzeuges auch verbessern lässt, wenn dieses nur weit unterhalb der maximal möglichen Nutzlast belastet ist.

Die vorliegende Erfindung wird anhand der beiliegenden Zeichnungen näher erläutert. Dabei zeigen:
- Figur 1: eine erfindungsgemäße Vorrichtung und Federeinheit in einer Seitenansicht;
- Figur 2: eine Achse eines Kraftfahrzeuges in Fahrtrichtung;
- Figur 3: eine Befestigungseinrichtung zur Befestigung der Zug- und/oder Druckfeder an der Blattfeder in einer Seitenansicht;
- Figur 4: eine perspektivische Darstellung der Befestigungseinrichtung zur Befestigung der Zug- und/oder Druckfeder an der Blattfeder und
- Figur 5: eine herkömmliche Blattfeder.

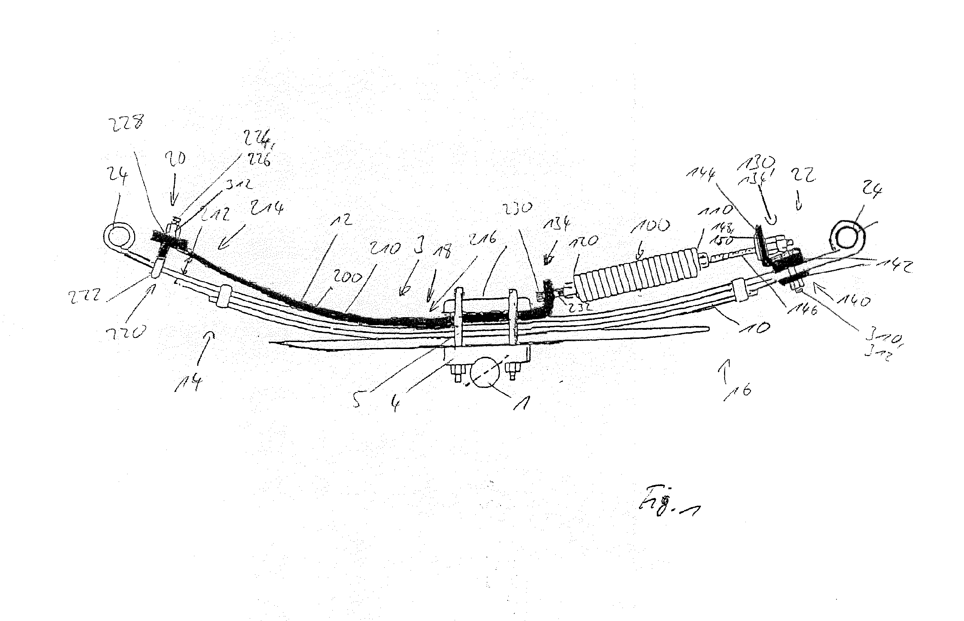

In Figur 1 ist eine Blattfeder 10 dargestellt, die mehrere Federlagen in einem Paket miteinander verbindet. Oberhalb der Blattfeder 10 ist die erfindungsgemäße Vorrichtung 3 angeordnet. Die Blattfeder 10 ruht auf einer Achse 1 und ist an dieser über einen Lagerbock 4 mit Haltebügeln 5 verbunden. Die Haltebügel 5 umfassen beziehungsweise klemmen ebenfalls die Biegefeder 200 der erfindungsgemäßen Vorrichtung 3. Mit der Biegefeder 200 verbunden ist über eine Schraubverbindung 230 und eine zweite Gewindestange 232 die Zug- und/oder Druckfeder 100. Diese Zug- und/oder Druckfeder 100 ist wiederum mit einer ersten Gewindestange 146 mit einer Befestigungseinrichtung 130 verbunden. Diese Befestigungseinrichtung 130 umfasst eine Klemmeinheit 140, die an die Blattfeder 10 angeschlossen ist.

Auf der gegenüber liegenden Seite ist an der Biegefeder 200 eine Anschlusseinrichtung 220 angeordnet, die über Bügel 222 mit der Blattfeder 10 im Eingriff ist. An den Enden der Blattfeder 10 sind zwei Augen 24 angeordnet, die zur Befestigung der Blattfeder 10 an der Karosse eines Kraftfahrzeuges dienen. Dabei ist die Erfindung nicht auf Blattfedern 10 mit Augen 24 beschränkt, sondern es können auch Blattfedern mit Andruckflächen beziehungsweise Auflageflächen zur Auflage der Karosserie vorgesehen sein.

Die Blattfeder 10 umfasst wenigstens einen Bereich der Oberflächenkrümmung 12, in dem die Blattfeder 10 mit einem bestimmten Radius gekrümmt ist. Vorteilhafterweise ist diese Oberflächenkrümmung 12 zur Herstellung der Symmetrie der Blattfeder 10 auf der ersten Blattfederseite 14 sowie der zweiten Blattfederseite 16 vorhanden. Die Verbindung mit der Biegefeder 200 erfolgt somit in einem ersten Endbereich 20 der Blattfeder 10 und die Verbindung mit der Zug- und/oder Druckfeder 100 erfolgt in einem zweiten Endbereich 22 der Blattfeder 10.

Die Biegefeder 200 kommt flächig in einem Teilbereich des Hauptblattes 18 der Blattfeder 10 auf diesem zur Anlage. Durch einen gekrümmten Bereich 210 der Biegefeder 200 steht diese mit dem Abstand 212 im Biegefederendbereich 214 von der Blattfeder 10 ab. Durch die bereits erwähnten Haltebügel 5 wird dabei die Biegefeder 200 mit einer Fläche beziehungsweise einem Anlagebereich 216 auf den bereits erwähnten Teilbereich des Hauptblattes 18 gepresst und an dieser Stelle fixiert. Das heißt, dass der Lagerbock 4 zusammen mit den Haltebügeln 5 und den Lagen der Blattfeder 10 eine feste Einspannung für die Biegefeder 200 realisiert.

Die Anschlusseinrichtung 220 ist derart ausgeführt, dass durch sie der Abstand 212 verändert werden kann. Zu diesem Zweck sind die die obere Lage der Blattfeder 10 umgreifenden Bügel 222 an den jeweiligen Bügelschenkeln 224 mit jeweils einem Außengewinde 226 versehen, die durch Durchgangslöcher 228 in der Anschlusseinrichtung 220 geführt und mittels Muttern 312 fixiert sind. Bei Drehung der Muttern 312 lässt sich somit der Abstand 212 verändern und damit die Vorspannung in der Biegefeder 200 einstellen. Je nach Vorspannung der Biegefeder 200 wird eine jeweils unterschiedliche Kraft auf die Blattfeder 10 ausgeübt, so dass die Federrate der Einheit von Blattfeder 10 und Biegefeder 200 eine andere ist, als die der Blattfeder 10.

In ähnlicher Weise ist die Federrate der Blattfeder 10 durch die Zug- und/oder Druckfeder 100 variierbar, da diese an ihrem ersten Ende 110 eine erste Gewindestange 146 aufweist, die durch ein Aufnahmeformelement beziehungsweise Durchgangsloch 144 im Schenkel 150 eines Winkels 148 hindurch geführt ist und mittels danach angeordneter Muttern 312 befestigt ist. Dieser Winkel 148 stellt zusammen mit der ersten Gewindestange 146 und den Muttern 312 die erste Verstelleinrichtung 132 für die Zug- und/oder Druckfeder 100 dar. Der Winkel 148 ist über Gewindebolzen 310 und Muttern 312 mit einer ersten Spannplatte 142 verbunden, die wiederum mit Gewindebolzen 310 und Muttern 312 mit einer weiteren Spannplatte 142 verbunden ist. Beim Anziehen der Muttern 312 unter der unteren Spannplatte der Klemmeinheit 140 wird die untere Spannplatte 142 an die obere Spannplatte herangezogen und bewirkt somit eine Klemmwirkung mit der Blattfeder 10. Es ist ersichtlich, dass die Klemmeinheit 140 in einem gewissen Längenbereich der Blattfeder 10 flexibel angeordnet werden kann. Bei Betätigung der ersten Verstelleinrichtung 132 am Ende der ersten Gewindestange 146 lässt sich somit die Zug- und/oder Druckfeder 100 vorspannen und somit die Kraft, die von der Zug- und/oder Druckfeder 100 in die Blattfeder 10 eingetragen wird, variieren. Da die Zug- und/oder Druckfeder 100 sowie auch die Biegefeder 200 mit der Blattfeder 10 im Wesentlichen in einer Parallelschaltung angeordnet sind, lässt sich somit die Federrate der Gesamt-Einheit der Federn einstellen.

Die Einstellung der von der Zug- und/oder Druckfeder 100 bewirkten Federkraft lässt sich allerdings nicht nur durch die erste Verstelleinrichtung 132 an der ersten Gewindestange 146 realisieren, sondern ebenfalls durch eine zweite Verstelleinrichtung 134, die an einer zweiten Gewindestange 232 mittels der dort angeordneten Schraubverbindung 230 an dem der Anschlusseinrichtung 220 gegenüber liegenden Ende der Blattfeder 200 realisiert ist. Auch durch die Verdrehung dieser Schraubverbindung 230 lässt sich die Vorspannung in der Zug- und/oder Druckfeder 100 variieren.

Die Belastung der gesamten Federeinheit erfolgt dabei üblicherweise so, dass in die Augen 24 die anteilige Gewichtskraft der Fahrzeugkarosserie eingebracht wird und die Reaktionskraft vom Rad 2 in die Achse 1 eingeleitet wird. Es ist ersichtlich, dass die Durchbiegung der Blattfeder 10 von der Einstellung der Biegefeder 200 sowie der Zug- und/oder Druckfeder 100 abhängig ist. Dabei kann die Verstellung einer jeweiligen Blattfederseite 14 oder 16 einzeln vorgenommen werden.

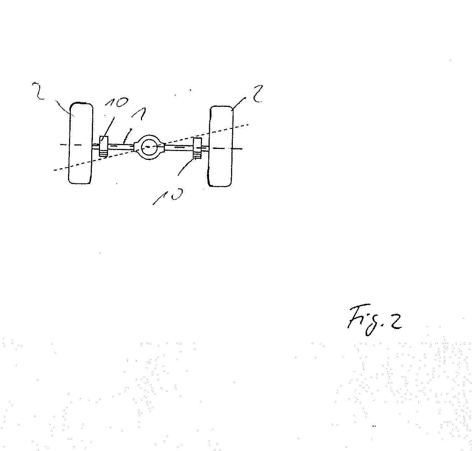

In Figur 2 sind die Orte der Anordnung der erfindungsgemäßen Federeinheit beziehungsweise Vorrichtung 3 an den Positionen der Blattfedern 10 dargestellt. Es ist ersichtlich, dass jedem Rad 2 eine Blattfeder 10 zugeordnet ist, so dass an einer Achse 1 somit zwei Blattfedern und daher vier erfindungsgemäße Verstellmöglichkeiten vorgesehen sind.

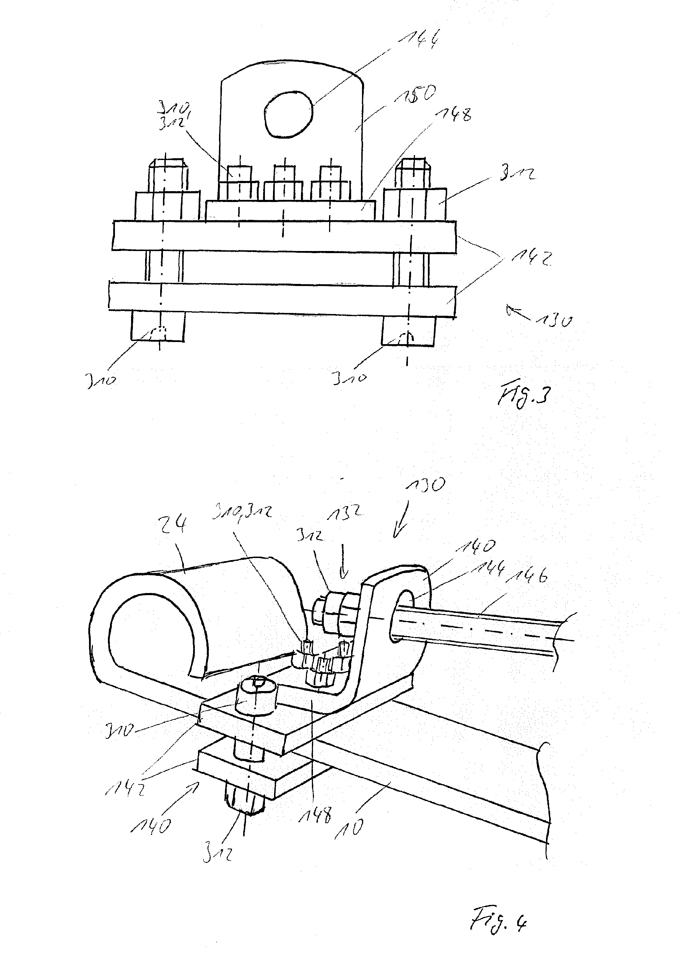

In den Figuren 3 und 4 ist die Befestigungseinrichtung 130 zur Befestigung der Zug- und/oder Druckfeder 100 an der Blattfeder 10 dargestellt. Deutlich ersichtlich sind die Spannplatten 142, die durch die Bolzen 310 und Muttern 312 in ihrem Abstand variiert werden können, so dass sie die insbesondere in Figur 4 dargestellte obere Lage beziehungsweise das Hauptblatt einer Blattfeder 10 einklemmen können. Zur Aufnahme der ersten Gewindestange 146 weist die Befestigungseinrichtung 130 einen Winkel 148 auf, in dessen senkrecht abstehenden Winkelschenkel 150 das als Durchgangsloch ausgebildete Aufnahmeformelement 144 angeordnet ist. Der Winkel 148 ist dabei ebenfalls über Gewindebolzen 310 und Muttern 312 mit der oberen Spannplatte 142 verbunden.

### Bezugszeichenliste

- 1: Achse
- 2: Rad
- 3: Vorrichtung
- 4: Lagerbock
- 5: Haltebügel
- 10: Blattfeder
- 12: Bereich der Oberflächenkrümmung
- 14: erste Blattfederseite
- 16: zweite Blattfederseite
- 18: Teilbereich des Hauptblattes
- 20: erster Endbereich der Blattfeder
- 22: zweiter Endbereich der Blattfeder
- 24: Auge
- 100: Zug- und/oder Druckfeder
- 110: erstes Ende
- 120: zweites Ende
- 130: Befestigungseinrichtung
- 132: erste Verstelleinrichtung
- 134: zweite Verstelleinrichtung
- 140: Klemmeinheit
- 142: Spannplatten
- 144: Aufnahmeformelement, Durchgangsloch
- 146: erste Gewindestange
- 148: Winkel
- 150: Winkelschenkel
- 200: Biegefeder
- 210: Bereich der Krümmung
- 212: Abstand
- 214: Biegefederabschnitt, Biegefederendbereich
- 216: Fläche, Anlagebereich
- 220: Anschlusseinrichtung
- 222: Bügel
- 224: Bügelschenkel
- 226: Außengewinde
- 228: Durchgangsloch
- 230: Schraubverbindung
- 232: zweite Gewindestange
- 310: Gewindebolzen
- 312: Mutter

## Patentansprüche

1. Vorrichtung zur Veränderung einer Blattfedercharakteristik, welche wenigstens eine Zug- und/oder Druckfeder zur Veränderung der Federrate einer Blattfeder, an der die Vorrichtung anbringbar ist, umfasst, wobei an ein erstes Ende der Zug- und/oder Druckfeder eine Befestigungseinrichtung zur Befestigung der Zug- und/oder Druckfeder an der Blattfeder angeschlossen ist, **dadurch gekennzeichnet, dass** die Vorrichtung (3) außerdem wenigstens eine Biegefeder (200) zur zusätzlichen Beeinflussung der Blattfederrate und eine Anschlusseinrichtung (220) zum mechanischen Verbinden der Biegefeder (200) mit der Blattfeder (10) und variierbaren Einstellung des Abstandes (212) zwischen zumindest einem Biegefederabschnitt (214) und der Blattfeder (10) umfasst.

2. Vorrichtung zur Veränderung einer Blattfedercharakteristik nach Anspruch 1, **dadurch gekennzeichnet, dass** die Biegefeder (200) mit der Zug- und/oder Druckfeder (100) mit deren zweitem Ende mechanisch verbunden ist.

3. Vorrichtung zur Veränderung einer Blattfedercharakteristik nach wenigstens einem der vorhergehenden Ansprüche, **dadurch gekennzeichnet, dass** die Biegefeder (200) wenigstens eine im Wesentlichen senkrecht zur Biegeebene verlaufende Fläche aufweist, welche flächig an einen Teilbereich einer oberen Lage der zu beeinflussenden Blattfeder (10) anlegbar ist und dort fixierbar ist.

4. Vorrichtung zur Veränderung einer Blattfedercharakteristik nach wenigstens einem der vorhergehenden Ansprüche, **dadurch gekennzeichnet, dass** die Biegefeder (200) einen Krümmungsradius aufweist, der unterschiedlich zum Krümmungsradius einer obersten Lage der Blattfeder (10) ist, auf der die Federlage zu befestigen ist.

5. Vorrichtung zur Veränderung einer Blattfedercharakteristik nach einem der vorhergehenden Ansprüche, **dadurch gekennzeichnet, dass** die Befestigungseinrichtung (130) eine erste Verstelleinrichtung (132) umfasst, mittels derer die Vorspannung der Zug- und/oder Druckfeder (100) variierbar ist.

6. Vorrichtung zur Veränderung einer Blattfedercharakteristik nach einem der vorhergehenden Ansprüche, **dadurch gekennzeichnet, dass** die Befestigungseinrichtung (130) eine Klemmeinheit (140) mit wenigstens einem Aufnahmeformelement (144) zur Aufnahme einer an der Zug- und/oder Druckfeder (100) angeordneten ersten Gewindestange (146) aufweist.

7. Vorrichtung zur Veränderung einer Blattfedercharakteristik nach einem der vorhergehenden Ansprüche, **dadurch gekennzeichnet, dass** die Zug- und/oder Druckfeder (100) eine Federrate von 30 bis 80 N/mm aufweist.

8. Vorrichtung zur Veränderung einer Blattfedercharakteristik nach einem der vorhergehenden Ansprüche, **dadurch gekennzeichnet, dass** die Biegefeder (200) aus einem typischen Blattfedermaterial besteht.

9. Vorrichtung zur Veränderung einer Blattfedercharakteristik nach einem der vorhergehenden Ansprüche, **dadurch gekennzeichnet, dass** die Anschlusseinrichtung (220) einen Bügel (222) zum Umgreifen wenigstens einer Lage der Blattfeder (10) umfasst und die Schenkel (224) des Bügels (222) jeweils ein Außengewinde (226) aufweisen, welche in Zusammenwirkung mit Durchgangslöchern in einer weiteren Spannplatte (142) und Muttern (312) einen verschiebbaren und hinsichtlich des Abstandes (212) zwischen Blattfeder (10) und Biegefeder (200) verstellbaren mechanischen Anschluss realisieren.

10. Federeinheit, umfassend wenigstens eine Blattfeder und eine daran befestigte erfindungsgemäße Vorrichtung zur Veränderung einer Blattfedercharakteristik nach wenigstens einem der Ansprüche 2 bis 9, wobei die Biegefeder (200) neben der Befestigung mittels der der Zug- und/oder Druckfeder (100) zugeordneten Befestigungseinrichtung (130) und der der Biegefeder (200) zugeordneten Anschlusseinrichtung (220) mit wenigstens einer im Wesentlichen senkrecht zur Biegeebene verlaufenden Fläche flächig an einen Teilbereich des Hauptblattes (18) der Blattfeder (10) angelegt und dort befestigt ist.

11. Federeinheit nach Anspruch 10, **dadurch gekennzeichnet, dass** die Befestigung im Anlagebereich mittels einer Klemmeinrichtung zur kraftschlüssigen Verbindung der einzelnen Lagen der Blattfeder (10) realisiert ist.

12. Federeinheit nach wenigstens einem der Ansprüche 10 oder 11, **dadurch gekennzeichnet, dass** sich der Anlagebereich im Wesentlichen in der Mitte der Blattfeder (10) befindet und die Verbindung zwischen der Blattfeder (10) und der Biegefeder (200) durch die Anschlusseinrichtung (220) und die Verbindung zwischen der Blattfeder (10) und der Zug- und/oder Druckfeder (100) durch die Befestigungseinrichtung (130) an den jeweiligen Endbereichen (20, 22) der Blattfeder (10) realisiert ist.

13. Federeinheit nach wenigstens einem der Ansprüche 10 bis 12, **dadurch gekennzeichnet, dass** der Abstand (212) zwischen der Anschlusseinrichtung (220) an der Biegefeder (200) und der Befestigungseinrichtung (130) an der Zug- und/oder Druckfeder (100) wenigstens fünf Sechstel der Länge der Blattfeder (10) beträgt.

14. Federeinheit nach wenigstens einem der Ansprüche 9 bis 13, **dadurch gekennzeichnet, dass** die Befestigungseinrichtung (130) mittels der Klemmeinheit (140) gemäß Anspruch 6 und die Anschlusseinrichtung (220) mittels des Bügels (222) gemäß Anspruch 9 mit der Blattfeder (10) mechanisch verbunden sind.

15. Kraftfahrzeug, insbesondere Transporter oder Bus, umfassend wenigstens eine Federeinheit nach wenigstens einem der Ansprüche 10 bis 14.
